Europäisches Patentamt

European Patent Office

Office européen des brevets

(11) Publication number: **0 211 409**
**A1**

## (12) EUROPEAN PATENT APPLICATION

(21) Application number: **86110614.4**

(51) Int. Cl.⁴: **H01M 6/38**

(22) Date of filing: **31.07.86**

(30) Priority: **05.08.85 US 762332**

(43) Date of publication of application:
**25.02.87 Bulletin 87/09**

(84) Designated Contracting States:
**DE FR GB IT**

(71) Applicant: **ALTUS CORPORATION**
**1610 Crane Court**
**San Jose California 95112(US)**

(72) Inventor: **Smith, David Farnham**
**540 Sunset Road**
**Boulder Creek California 95006(US)**

(74) Representative: **Bernhardt, Klaus**
**Radeckestrasse 43**
**D-8000 München 60(DE)**

(54) **High energy density reserve battery with extended wet stand life.**

(57) Within the housing (60) of a reserve battery cell is included an anode and cathode collector (58) and a quantity of electrolyte (55) which, when applied to the anode and cathode collector, causes the battery to generate an electric current. The electrolyte is separated from the region containing the anode and cathode collector by a first separator (56) which will burst upon the application of sufficient pressure. The housing further encloses a piston means (54) located in contact with the electrolyte. The piston is capable of traveling within the cell housing and is capable of applying sufficient pressure to the electrolyte to burst the separator (56) upon the application of externally applied pressure to the piston.

Batteries of cells so defined are not subject to common electrolyte problems which are existant with the prior art method.

FIG._3.

## High Energy Density Reserve Battery With Extended Wet Stand Life

Technical Field of Invention

The present invention is primarily concerned with means for activating a reserve battery cell or a tandem of cells via a common manifold while preventing intercell electrolyte paths to exist.

Background of the Invention

Reserve battery cells are characterized, as the name implies, by the ability to maintain anode and cathode portions of the cell in a dry or unactivated state prior to use. To achieve activation, the electrolyte necessary for battery operation is fed to the individual cells whereupon an electric current may emanate from the cell terminals through an external load.

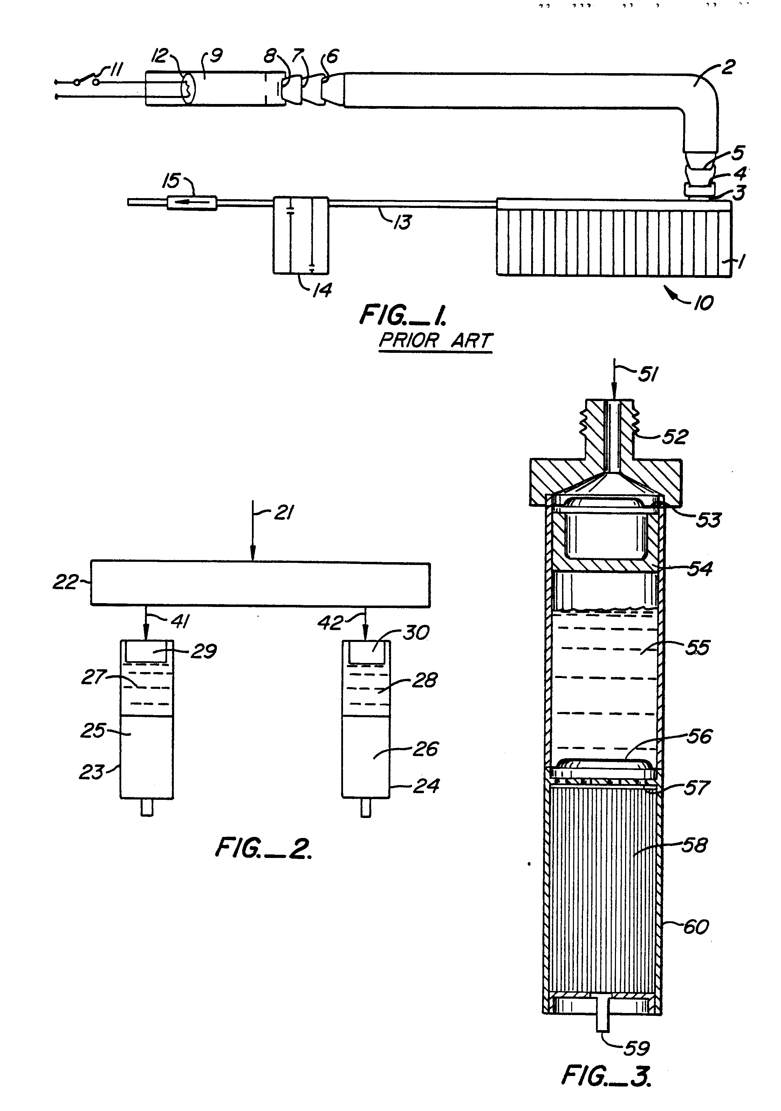

Fig. 1 depicts a typical prior art approach to the activation of a reserve battery containing a number of cells. Turning to Fig. 1, a stack 10 of individual cells 1, each containing its own anode and cathode, is provided in a dry or unactivated state. As such, the cells are capable of being used years after initial manufacture with little or no loss of potential energy.

When activation is desired, an activation signal is provided by closing switch 11 which sparks electrical match 12 and ignites propellant 9. The force of expansion of the propellant generates gas sufficient to rupture or burst diaphragms 6, 7 and 8 and put pressure upon the electrolyte located in reservoir 2. Being a liquid, the electrolyte is relatively uncompressable and thus the force generated by the gas generator propellant causes diaphragms 4 and 5 to rupture, allowing the electrolyte to pass within manifold entry 3 and into individual cells 1.

As cells 1 fill, there is generally an overflow of electrolyte which passes through vent tube 13 into sump 14. Relief valve 15 is provided for the venting of trapped gas downstream of the passing electrolyte.

Although the structure depicted in Fig. 1 is more than adequate to activate a high density reserve cell, certain inherent difficulties are experienced by this typical prior art approach to the activation problem. The most common problem observed is that after activation, a pool of electrolyte is caused to appear in each cell and throughout the manifold which provides a current leakage path between cells. In other words, there is simply no liquid seal which is formed after the activation process is carried out. In addition, the interconnecting electrolyte paths can result in parasitic capacity losses after activation but before use of the battery as well as an unwanted gas pressure buildup and, in extreme cases, catastrophic battery short-circuiting via metal deposition within the manifold housing. The only requisite for current leakage is a continuous path of conductive electrolyte between cells. This provides the necessary potential difference to support electrochemical reactions which result in metal deposition and electrolysis within the affected battery assembly.

A further disadvantage inherent in the use of prior art designs is typified by Fig. 1 and is a result of the rather long distances which the electrolyte must travel to activate each battery cell. Oftentimes, high energy reserve batteries are provided for use in military and other critical environments where rapid activation is essential. Related problems which result from long electrolyte manifolds are the observance of pressure drops and frictional losses which require that gas generators or other pressure sources be sized to overcome these various losses inherent in the prior art designs.

It is thus an object of the present invention to provide a reserve battery cell which can be activated at will without experiencing any of the disadvantages inherent in the known prior art designs.

It is yet a further object of the present invention to provide a reserve battery cell which can be activated and, upon activation, eliminate virtually all parasitic capacity losses between individual cells due to common electrolyte paths.

It is still a further object of the present invention to provide a reserve battery cell which can be activated quicker than corresponding cells of the prior art by eliminating the long electrolyte pathway which has heretofore been necessary.

These and further objects of the present invention will be more readily appreciated when considering the following disclosure and appended figures wherein:

Fig. 1 represents a schematic depiction of a typical prior art approach to the activation of a reserve battery.

Fig. 2 represents a schematic overall depiction of the present invention.

Fig. 3 shows an individual battery cell in detail.

## Summary of the Invention

The present invention deals with a reserve battery cell which comprises a battery cell housing, an anode and cathode collector located within the housing, a separator layer, and a quantity of electrolyte which, when applied to the anode and cathode collector, causes the battery to generate an electric current. The present invention differs from the prior art by providing a first separator barrier located between the electrolyte and anode and cathode collector which is capable of preventing the electrolyte from contacting the anode and cathode collector until sufficient pressure is applied to burst the barrier. Piston means is provided, also in contact with the electrolyte, said piston being capable of traveling within the battery housing and being further capable of supplying sufficient pressure to the electrolyte to burst the separator upon the application of externally applied pressure to the piston.

In practicing the present invention, it should be noted that sufficient electrolyte for each individual battery cell is provided within the battery cell housing itself so that no common electrolyte reservoir is needed. Further, upon activation, the piston is caused to reside as a hermetic sealing means separating the battery cell and its internal components from the external environment, including other similarly provided battery cells.

## Detailed Description of the Invention

Although the means for activating reserve cells as presented herein can be used with virtually any electrochemical battery using liquid electrolyte, the present invention is particularly useful when utilizing a highly reactive "consummable" anode material such as an alkaline metal. Typical electrochemical batteries include an outer casing and electrically insulated terminals which together define a sealed interior chamber. Batteries also typically include an arrangement for electrically interconnecting components located within the chamber for producing a voltage drop of a characteristic value across the terminals. A common arrangement of this type is made up of an anode, an electrically insulated and spaced-part cathode, and an electrolyte solution which fills the chamber and surrounds the various other components making up the arrangement.

To meet the demand for high performance batteries, substantial work has been done with cell chemistry using an alkaline metal anode, particularly lithium. The cathode and electrolyte material consisting of a solvent and a solute vary. Indeed, the literature is replete with examples of alkaline metal anode cells with different cathodes and electrolytes. The electrical characteristics of these cells, such as energy per unit volume, called energy density, cell voltage, and internal impedence, vary greatly.

Among all known combinations of lithium anode with different cathodes and electrolytes, those believed to have among the highest energy density and current delivery capability use certain inorganic liquids as the active cathode depolarizer. This type of cell chemistry is commonly referred to as a liquid cathode.

The use of a liquid as an active cathode depolarizer is a conventional expedient in current cell technology. Until recently, it was generally believed that the active cathode depolarizer could never directly contact the anode. However, it is now known that certain active cathode materials do not react chemically to any appreciable extent with an active anode material at the interface between the metal and the cathode material, thereby allowing the cathode material to contact the anode directly.

Typical of such cells is the employment of an anode such as lithium metal or alloys of lithium in an electrolyte solution which is an ionically conductive solute dissolved in a solvent that is also the active cathode depolarizer. This solute may be a simple or double salt which will produce an ionically conductive solution when dissolved in the solvent. Preferred solutes are complexes of inorganic or organic Lewis acids and an inorganic ionizable salt. The requirements for utility are that the salt, whether simple or complex, be compatible with the solvent being employed, yielding a solution which is ionically conductive. According to the Lewis or electronic concept of acids and bases, many substances which contain no. active hydrogen can act as acids or acceptors or electron doublets. In U.S. Patent No. 3,542,602, it is suggested that the complex or double salt formed between a Lewis acid and an ionizable salt yields an entity which is more stable than either of the components alone.

Typical Lewis acids suitable for use in electrochemical cells such as those disclosed herein include aluminum chloride, antimony, pentachloride, zirconium tetrachloride, phosphorus pentachloride, boron fluoride, boron chloride, and boron bromide.

Ionizable salts useful in combination with the Lewis acids include lithium chloride, lithium fluoride, lithium bromide, lithium sulfide, sodium fluoride, sodium chloride, sodium bromide, potassium fluoride, potassium chloride, and potassium bromide.

The double salts formed by a Lewis acid and an inorganic ionizable salt may be used as such, or the individual components may be added to the solvent separately to form the salt. One such double salt, for example, is that formed by the combination of aluminum chloride and lithium chloride to yield lithium aluminum tetrachloride. In addition to an anode, active cathode depolarizer (liquid cathode) and an ionically conductive electrolyte, the cells require a current collector or cathode collector comprised of, in many instances, compressed carbon either alone or with other additives including binders.

In the typical electrochemical cell as described above, thionyl chloride is employed as a preferred solvent-depolarizer. In such a system, the discharge reaction is as follows:

$$4 \text{ Li} + 2 \text{ SOCl}_2 \longrightarrow 4 \text{ LiCl} + \text{SO}_2 + \text{S}$$

Typically contained within the liquid depolarizer and as an important constituent of the electrolyte is a solute such as $LiAlCl_4$ contained in the range of approximately 0.3 to 3.0 M. These various contituents make up what Applicant herein has referred to as the electrolyte which, as previously noted, is kept separate and apart from the anode and cathode collector which, as a result, are maintained in a dry state until the reserve cell is "activated."

Turning now to Fig. 2, a rather schematic portrayal of the present invention is provided. In operation, a source of pressure is schematically shown as arrow 21 which can emanate from any well-known source such as that shown in Fig. 1 whereby an activation signal ignites a propellant and generates a quantity of gas. This in turn exerts an hydraulic pressure upon manifold 22 which, unlike the prior art, contains no electrolyte but only a gas or similar fluid.

The manifold at distribution head 22 is functionally connected to reserve battery cells 23 and 24 such that pneumatic pressure is caused to enter each cell shown schematically as arrows 41 and 42. This in turn places a downward pressure upon pistons 29 and 30, causing electrolyte 27 and 28 to press against burst seals (not shown). Upon the failure of the burst seals, the electrolyte enters cells 25 and 26, resulting in activation of the battery.

The above-recited configuration is depicted in more detail in Fig. 3. Although the manifold is not shown, pressure is exerted by the previously discussed distribution head such that a quantity of gas is caused to enter cell 60 as schematically shown by arrow 51. The cell should be connected to the manifold or distribution head via an electrically insulative connector 52. This can be accomplished by, for example, a ceramic-to-metal screw fitting. Alternatively, one could simply glue the cell to a plastic manifold in the event that high temperatures are not anticipated. Such connectors are well-known to those skilled in the art.

Once sufficient pressurization is achieved, burst discs 53 produced of, for example, scored stainless steel are caused to rupture upon, as a design parameter, between approximately 50 to 200 psiq. Thereupon, piston 54, which can be comprised of, for example, a cup-shaped piece of Teflon®, exerts an hydraulic pressure upon the reservoir of electrolyte 55. When sufficient pressure is achieved, again, between preferrably 50 to 200 psig, burst disc 56, which again can be composed of scored stainless steel, spontaneously fractures, allowing the electrolyte to pass through perforated plate 57 and into battery cell 58. An electric potential can then be measured between terminal 59 and ground.

Although not made part of the present invention, it is noted that virtually any cell-plate configuration can be employed in practicing the present invention. For example, one can employ a spirally wound cell, or parallel plates, or even a bobbin-type configuration, while remaining within the spirit and scope of the present invention.

Example

A five-cell battery was fabricated as individually spirally wound cells connected to a common gas generating manifold in a manner described in reference to Figs. 2 and 3, above. Each cell was configured as spirally wound arrays of lithium anode, alumina ceramic separator, and a carbon cathode. The working surface area of each cell was 160 cm². The electrolyte which was employed was a mixture of $LiAlCl_4$ and thionyl chloride. The cells were connected electrically in series to form a five-cell battery.

The cells were connected by means of plastic tubing to a common gas manifold plenum. The battery was activated by means of argon gas pressurized at approximately 70 psig. The battery voltage reached a level of 18.25 volts. After a two-minute period, the battery was discharged at 600 mA for a period of twenty minutes with a load voltage of 17.0 volts. The battery was allowed to stand unloaded for 11 days after which it was discharged at 600 mA for twenty minutes with a load voltage of 17.0 volts. The battery demonstrated an extended wet stand with no fluctuation in open circuit voltage, which would be indicative of common electrolyte-induced current leakage, nor was there any evidence of electrolyte in any of the gas tubes.

## Claims

1. A reserve battery cell comprising
   a. a battery cell housing,
   b. an anode and cathode collector located within said housing,
   c. a quantity of electrolyte which, when applied to said anode and cathode collector causes the battery to generate an electric current through an external load,
   d. a first separator located between said electrolyte and anode and cathode collector, said separator being capable of preventing said electrolyte from contacting said anode and cathode collector until sufficient pressure is applied to burst said separator, and
   e. piston means located in contact with said electrolyte which is capable of traveling within said battery housing and being further capable of applying sufficient pressure to said electrolyte to burst said separator upon the application of externally applied pressure to the piston whereupon said piston is caused to reside as a hermetic sealing means separating the anode and cathode collector located within said housing from the external environment.

2. The reserve battery cell of claim 1 further comprising a second separator located between said piston and means for creating said externally applied pressure wherein said second separator is capable of bursting upon the application of sufficient externally applied pressure.

3. The reserve battery cell of claim 1 wherein the electrolyte comprises the combination of thionyl chloride and lithium aluminum chloride - (LiAlC1₄).

4. The reserve battery cell of claim 1 wherein said anode comprises lithium.

5. The reserve battery cell of claim 2 further comprising a third separator located within said battery housing between said first separator and said anode and cathode collector, said third separator being capable of transmitting electrolyte therethrough upon the bursting of said first separator.

6. The reserve battery cell of claim 1 wherein said externally applied pressure is exerted upon said piston in the form of a gas.

7. The reserve battery cell of claim 6 wherein said gas is made available from a central manifold which is in fluid communication with additional reserve battery cells.

8. A method of activating a reserve battery cell which, prior to activation, comprises
   a. a battery cell housing,
   b. an anode and cathode collector located within said housing,
   c. a quantity of electrolyte, being separated from said anode and cathode collector by a first separator, and
   d. piston means located in contact with said electrolyte which is capable of traveling within said battery cell housing,
   wherein said method comprises applying pressure to said piston which in turn exerts pressure upon said electrolyte and first separator sufficient to cause first separator to burst and electrolyte to pass therethrough to contact said anode and cathode current collector whereupon said piston is caused to reside as a hermetic sealing means separating the anode and cathode collector located within said housing from the external environment.

9. The method of claim 8 wherein a second separator is located between said piston and means for creating said externally applied pressure wherein said second separator is capable of bursting upon the application of sufficient externally applied pressure.

10. The method of claim 8 wherein the electrolyte comprises the combination of thionyl chloride and lithium aluminum chloride (LiAlC1₄).

11. The method of claim 8 wherein the anode is lithium.

12. The method of claim 8 further comprising a third separator located within said cell housing between said first separator and said anode and cathode collector, said third separator being capable of transmitting electrolyte therethrough upon the bursting of said first separator.

13. The method of claim 8 wherein said externally applied pressure is exerted upon said piston in the form of a gas.

14. The method of claim 13 wherein said gas is made available from a central manifold which is in fluid communication with addition of reserve battery cells.

15. The method of claim 14 wherein upon activation substantial electrical insulation exists between battery cells.

FIG._1.
PRIOR ART

FIG._2.

FIG._3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 768 188 (SOCIETE E.R.E.C.) <br> * Page 1, lines 24-41; page 2, lines 46-75; figures 1,2 * | 1,8 | H 01 M 6/38 |
| | --- | | |
| X | EP-A-0 115 099 (PHILIPS NORDEN AB) <br> * Page 4, lines 7-35; figure 1 * | 1,6,8, 13 | |
| Y | | 3,4,7, 10,11, 14,15 | |
| | --- | | |
| Y | EP-A-0 079 226 (THE MARCONI CO. LTD.) <br> * Page 5, lines 1-36 * | 3,4,10 ,11 | |
| | --- | | **TECHNICAL FIELDS SEARCHED (Int. Cl.4)** |
| Y | NASA TECH BRIEFS, AMES RESEARCH CENTER, no. 2, May 1974, Washington, US; C. SOLLO et al.: "Battery activation system" <br> * Whole document * | 7,14, 15 | H 01 M |
| | --- | | |
| X | GB-A-1 169 050 (VARTA AG) <br><br> * Page 1, lines 42-77; figures * | 1,6,8, 13 | |
| | ---     -/- | | |

The present search report has been drawn up for all claims

| Place of search | Date of completion of the search | Examiner |
|---|---|---|
| THE HAGUE | 03-11-1986 | COOK S.D. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | US-A-4 517 736 (GOEBEL)<br><br>* Abstract; column 3, lines 29-62 * | 1,3,4,<br>8,10,<br>11 | |
| | --- | | |
| A | DE-A-2 226 332 (J.C. BOGUE)<br><br>* Figure 4a; page 8, lines 21-32 * | 1,6,8,<br>13 | |
| | --- | | |
| A | US-A-4 218 525 (SELGIN)<br><br>* Claims 1,2; column 1, lines 41-52 * | 1,6,8,<br>13 | |
| | ----- | | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 03-11-1986 | COOK S.D. |